# EUROPÄISCHE PATENTSCHRIFT

(11) **EP 1 841 674 B1**
(45) Veröffentlichungstag und Bekanntmachung des Hinweises auf die Patenterteilung: **18.06.2008**
(21) Anmeldenummer: 05810631.1
(22) Anmeldetag: 26.11.2005
(51) Int. Cl.: B65G 21/22

(54) **GELENKIGE SCHIENENVERBINDUNG FÜR SCHIENENSTÖSSE VON PROFILLAUFSCHIENEN**
ARTICULATED RAIL CONNECTION FOR RAIL JOINTS OF PROFILED SLIDING RAILS
ECLISSAGE DE RAILS ARTICULE POUR JOINTS DE RAILS DE ROULEMENT PROFILES

(30) Priorität: 22.01.2005 DE 202005001030 U
(43) Veröffentlichungstag der Anmeldung: 10.10.2007
(73) Patentinhaber: Neuhäuser GmbH + Co. Lager- und Fördersysteme, 44532 Lünen (DE)
(72) Erfinder: NEUHÄUSER, Helmut, 44532 Lünen (DE)
(74) Vertreter: Nunnenkamp, Jörg
(86) Internationale Anmeldenummer: PCT/EP2005/012672
(87) Internationale Veröffentlichungsnummer: WO 2006/076941

(56) Entgegenhaltungen:
- WO-A-20/04033797
- FR-E- 90 048

## Beschreibung

Die Erfindung betrifft eine gelenkige Schienenverbindung für Schienenstöße von Profillaufschienen, wobei zumindest im oberen Stoßbereich benachbarter Schienenstöße eine Gelenkverbindung mit wenigstens einer den Stoßbereich überbrückenden Loslagerwange vorgesehen ist, und wobei zusätzlich eine Aufhängevorrichtung realisiert ist, welche mittels einer Lasche gelenkig an die Loslagerwange angeschlossen ist. - Solche Schienenverbindungen werden beispielsweise im untertägigen Streckenausbau für den Betrieb von Einschienenhängebahnen benötigt.

Im Rahmen der Erfindung ist mit der den Stoßbereich überbrückenden Loslagerwange eine spezielle Lagerwange gemeint, nämlich eine solche, die lösbar mit einem oder beiden der zu verbindenden benachbarten Schienenstöße gekoppelt ist. Dazu können Lagerbolzen etc. vorgesehen werden, die sich entfernen lassen, um die Loslagerwange (wieder) freizugeben. Demgegenüber kennzeichnet eine Festlagerwange eine Lagerwange, welche in betriebsfertigem Zustand mit dem jeweiligen Schienenstoß beispielsweise durch Schweißen verbunden ist.

Im Stand der Technik entsprechend der FR 90 048 kommt eine mit Kettengliedern arbeitende Aufhängevorrichtung zum Einsatz. Dabei untergreift das letzte Kettenglied die den Stoßbereich überbrückende Loslagerwange. Hierbei handelt es sich um einen bogenförmigen Bolzen, der in entsprechenden Festlagerwangen mit korrespondierenden Bolzenaufnahmen gehalten wird. Bei dieser Konstruktion können nur begrenzte Gewichte von den Schienenstößen bzw. den aus den Schienenstößen zusammengesetzten Profillaufschienen aufgenommen werden.

Aus diesem Grund hat man in der WO 2004/033797 A1 bereits vorgeschlagen, die Loslagerwange zwischen zwei im Wesentlichen V-förmigen Festlagerwangen einerseits an dem einen Schienenstoß und andererseits an dem anderen Schienenstoß festzulegen. Allerdings wird die Aufhängevorrichtung nicht -wie bei der FR 90 048- an der Loslagerwange festgelegt, sondern vielmehr an einer der beiden Festlagerwangenpaare.

Die bekannte gelenkige Schienenverbindung entsprechend der WO 2004/033797 A1 hat sich grundsätzlich bewährt, was die Aufnahme erhöhter Lasten angeht. Allerdings sind Verbesserungen möglich. So hat es sich herausgestellt, dass die lichte Durchgangshöhe in einer Strecke Schwankungen unterworfen ist und insbesondere während des Betriebes abnehmen kann. Das lässt sich u. a. darauf zurückführen, dass der Streckenausbau nicht den Streckenboden erfasst und folglich auf dem Streckenausbau lastende Bergkräfte in den Streckenboden eingeleitet werden und diesen heben können. Gleichzeitig nimmt das Gewicht und auch die Größe von üblicherweise an solchen Profillaufschienen geführten Einschienenhängebahnen ständig zu, um erhöhten Abbaugeschwindigkeiten Rechnung tragen zu können. Dadurch ist es erforderlich, den von der Aufhängevorrichtung eingenommenen Bauraum oberhalb der Profillaufschienen so gering wie möglich einzustellen und dennoch für eine zuverlässige Verankerung selbst bei großen Lasten zu sorgen.

Der Erfindung liegt das technische Problem zugrunde, eine derartige gelenkige Schienenverbindung für Schienenstöße von Profillaufschienen so weiterzuentwickeln, dass erhöhte Lasten bei verringertem Bauraum oberhalb der Schienenstöße problemlos aufgenommen werden können.

Zur Lösung dieser technischen Problemstellung schlägt die Erfindung bei einer gattungsgemäßen gelenkigen Schienenverbindung vor, dass die Loslagerwange eine Drehaufnahme für die Lasche aufweist, und dass die Loslagerwange zumindest im Bereich ihrer Drehaufnahme zwischen zwei beidseitigen Festlagerwangen an dem einen der beiden Schienenstöße fixiert ist.

Im Detail verfügt die Lasche über ein in die Drehaufnahme eingreifendes Wangendrehblatt. Das Wangendrehblatt ist mit einer Bohrung ausgerüstet. Zu dieser Bohrung korrespondieren zwei Lagerbohrungen in den Festlagerwangen des einen Schienenstoßes, wobei ein Lagerbolzen die beiden Lagerbohrungen in den Festlagerwangen und zusätzlich die Bohrung im Wangendrehblatt der Lasche durchdringt.

Darüber hinaus ist die Lasche mit einem weiteren Drehblatt, nämlich einem Schwingendrehblatt, ausgerüstet, welches drehbar an eine Schwinge der Aufhängevorrichtung angelenkt ist. Meistens setzt sich die Aufhängevorrichtung aus der besagten Schwinge sowie ein oder zwei Ketten zum Abspannen der Schwinge bzw. deren Festlegung am Streckenausbau zusammen.

Die beiden Schienenstöße bzw. der aus den Schienenstößen zusammengesetzte Profillaufstrang bzw. die Profillaufschienen werden folglich mit lediglich zwei Lagerbolzen mit der besagten Schwinge verbunden. Zunächst einmal ist ein Lagerbolzen in der Schwinge realisiert, welcher neben Bohrungen in Schwinge zugleich das Wangendrehblatt der Lasche durchdringt.

Mit Hilfe des weiteren Lagerbolzens wird das weitere und zwischen den beiden Festlagerwangen angeordnete Wangendrehblatt der Lasche gehalten.

Auf diese Weise gelingt erfindungsgemäß eine bedeutende Materialersparnis gegenüber dem Stand der Technik nach der WO 2004/033797 A1, wo insgesamt drei Lagerbolzen realisiert sind, um die dortige Schwinge mit der gelenkigen Schienenverbindung zu koppeln. Außerdem gewährleistet diese Bauweise, dass der zur Verfügung stehende Einbauraum oberhalb der Schienenstöße optimal genutzt wird bzw. die einzelnen Schienenstöße mit einem gegenüber dem Stand der Technik verringerten Deckenabstand an dieser aufgehängt werden können. Tatsächlich weist die Loslagerwange zusammen mit dem in die Drehaufnahme eingreifenden Wangendrehblatt der Lasche eine zusammengesetzte Höhe auf, welche im Wesentlichen derjenigen der beiden größtenteils gleich ausgebildeten Festlagerwangen entspricht. D. h., das Wangendrehblatt der Lasche steht nur geringfügig kopfseitig über die gleich ausgebildeten Festlagerwangen vor. Das erreicht die Erfindung dadurch, dass die Loslagerwange mit der Drehaufnahme für das Wangendrehblatt der Lasche ausgerüstet ist und folglich die Lasche gleichsam in die Loslagerwange eintauchen kann.

Gleichzeitig taucht auch das Schwingendrehblatt der Lasche in der Regel zwischen zwei Schwingenflanschen ein und steht nur geringfügig fußseitig über die Schwinge vor. Das hat zur Folge, dass zwischen dem Kopf der beiden Festlagerwangen und dem Fuß der Schwinge ein lediglich geringfügiger Spalt verbleibt, welcher so ausgelegt ist, dass Bewegungen der Schienenstöße zueinander und folglich der den Stoßbereich überbrückende Loslagerwange reibungsfrei zwischen den beiden Festlagerwangen und den beiden Schwingenflanschen aufgenommen werden.

Die Loslagerwange ist darüber hinaus mit wenigstens einem in eine Axialausnehmung der Festlagerwange eingreifenden Axialsteg ausgerüstet. Meistens sind beidseitig der Loslagerwange realisierte Axialstege vorgesehen, die einerseits in die eine Festlagerwange und andererseits in die andere Festlagerwange an dem einen Schienenstoß eingreifen. Dadurch wird die Loslagerwange während ihrer Montage zwischen den beiden Festlagerwangen des einen Schienenstoßes einwandfrei positioniert. Dagegen ist die Loslagerwange in Transportstellung der Schienenstöße an dem einen oder dem anderen Schienenstoß im Wesentlichen ohne Überstand festgelegt, kann folglich während des Transportes nicht abreißen. Erst bei der Montage der einzelnen Schienenstöße verlässt die Loslagerwange die vorgenannte Transportstellung und wird mit Hilfe der Axialstege in die den Stoßbereich überbrückende Position überführt und mittels des die Festlagerwange an dem einen Schienenstoß durchdringenden Lagerbolzen hieran lösbar befestigt.

Dabei ist die Montage zudem insofern erleichtert, als zunächst der eine Schienenstoß mit Hilfe der Schwinge bzw. der Aufhängevorrichtung am Streckenausbau befestigt werden kann und erst im Anschluss daran der anzuschließende Schienenstoß über die in Montagestellung vorstehende Loslagerwange geschoben und schließlich mit dieser gelenkig verbunden wird.

Zu diesem Zweck verfügt die Loslagerwange über eine an die Drehaufnahme für die Lasche bzw. deren Wangendrehblatt anschließende Anschlagzunge. Die Anschlagzunge wirkt mit einem Gegenanschlag an dem anderen Schienenstoß zusammen, wobei dieser Gegenanschlag an zwei Festlagerwangen des anderen Schienenstoßes angeschlossen ist. Tatsächlich übergreift der Gegenanschlag die Anschlagzunge und sorgt mit seiner der Anschlagzunge folgenden Kontur dafür, dass die beiden Schienenstöße schwenkbeweglich zueinander bewegt werden können und durch die am Gegenanschlag anliegende Anschlagzunge bei diesen Schwenkbewegungen eine Führung erfahren.

Ergänzend zu der beschriebenen gelenkigen Schienenverbindung im oberen Stoßbereich mag auch eine untere Gelenkverbindung mit Schwenklagerschale und hierin eingreifendem Schwenklagerblatt vorgesehen werden, wie sie grundsätzlich bekannt ist und beispielsweise in der eingangs bereits zitierten WO 2004/033797 A1 im Detail beschrieben wird. - Insgesamt hat es sich in diesem Zusammenhang bewährt, wenn Schienenstöße mit einem im Wesentlichen I-förmigem Querschnitt zum Einsatz kommen. Dabei können beispielsweise und nicht einschränkend ein im Wesentlichen U-förmiger Oberflansch mit U-Schenkeln und dazwischen angeordneter Ausnehmung realisiert werden. Gleichzeitig empfiehlt es sich, den Unterflansch umgekehrt U-förmig - wiederum mit zugehöriger Ausnehmung - auszuführen.

Im Ergebnis wird eine gelenkige Schienenverbindung für den oberen Stoßbereich benachbarter Schienenstöße zur Herstellung einer durchgängigen Profillaufschiene bzw. eines Profillaufschienenstranges beschrieben, die große Lasten aufzunehmen in der Lage ist und gleichzeitig nur äußerst geringen Einbauraum benötigt. Zugleich wird mit verringertem Materialeinsatz gearbeitet, so dass die Kosten reduziert sind. Hierin sind die wesentlichen Vorteile zu sehen.

Im Folgenden wird die Erfindung anhand einer lediglich ein Ausführungsbeispiel darstellenden Zeichnung näher erläutert; Es zeigen:
- Fig. 1: die erfindungsgemäße gelenkige Schienenverbindung perspektivisch,
- Fig. 2: den Gegenstand nach Fig. 1 mit teilweise entfernten Elementen zur besseren Darstellung und
- Fig. 3: verschiedene Schienenstöße.

In den Figuren ist eine gelenkige Schienenverbindung für Schienenstöße 1 a, 1 b von Profillaufschienen dargestellt. Die Schienenstöße 1 a, 1b verfügen im Rahmen des Ausführungsbeispiels über eine im Querschnitt 1-förmige Gestalt mit einem Oberflansch 2 und einem Laufflächen 3 bildenden Unterflansch 4. Auf den Laufflächen 3 werden üblicherweise Räder einzelner Wagons einer Einschienen-Hängebahn geführt und fortbewegt. Das ist jedoch nicht zwingend.

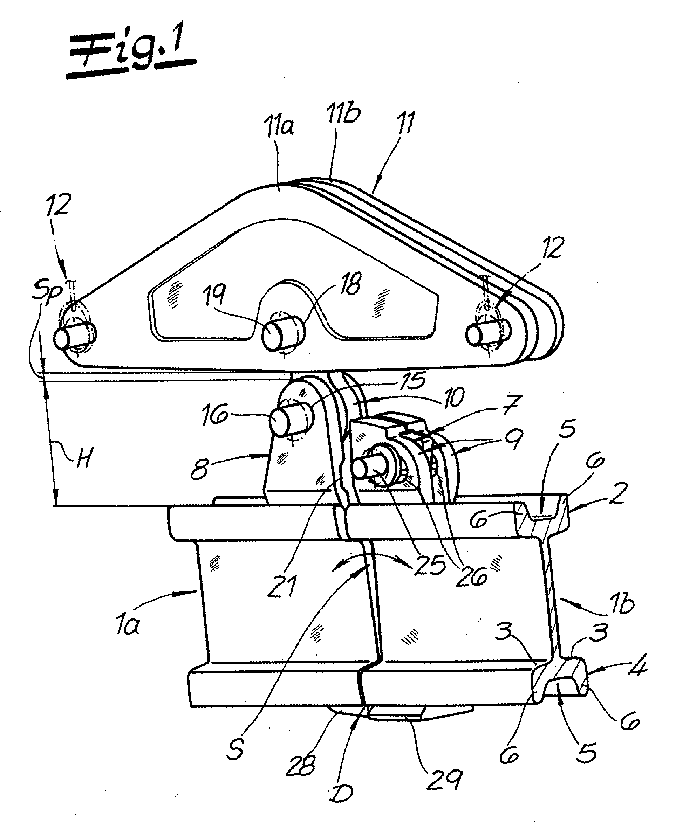

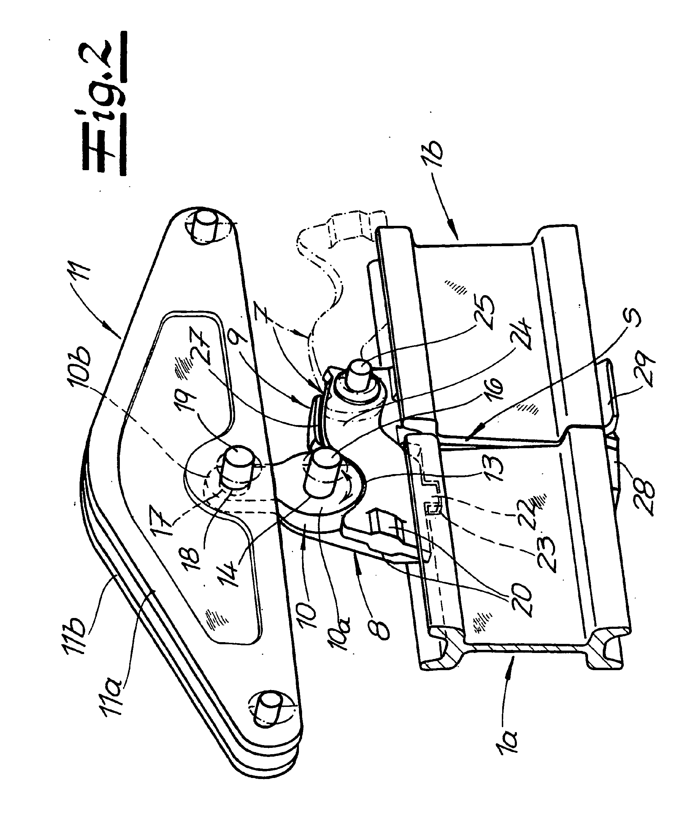

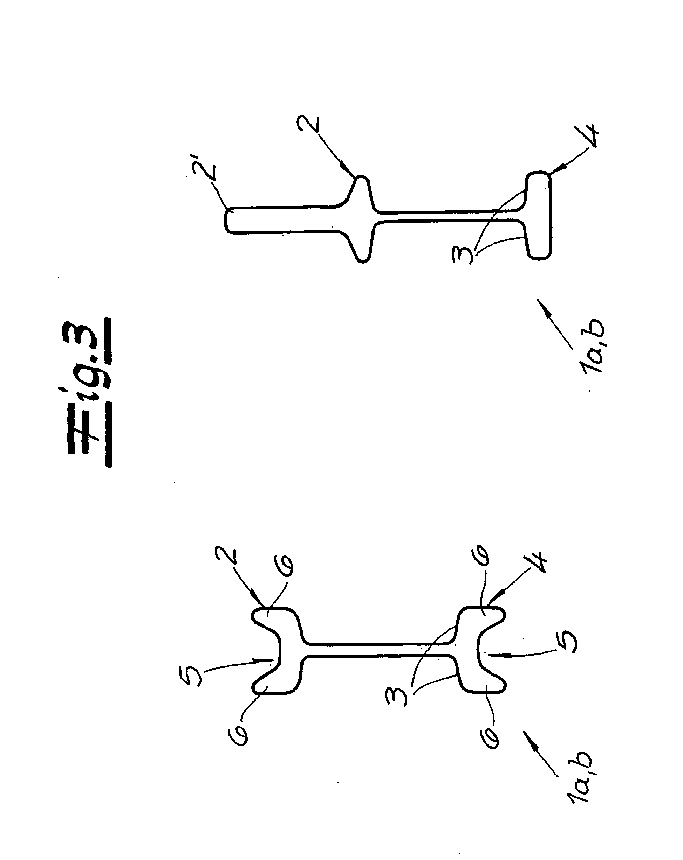

Ausweislich der Figuren 1 und 2 verfügen sowohl der Oberflansch 2 als auch der Unterflansch 4 über im Querschnitt jeweils taschenförmige Ausnehmungen 5. Das gilt auch für die im linken Teil der Fig. 3 dargestellten Schienenstöße 1a, 1 b. Dadurch sind die insgesamt 1-förmigen Schienenstöße 1 a, 1 b mit einem im Wesentlichen U-förmigen Oberflansch 2 mit U-Schenkeln 6 und dazwischen angeordneter Ausnehmung 5 ausgeführt. Gleiches gilt für den Unterflansch 4, der über ein umgekehrt U-förmiges Profil mit zugehörigen U-Schenkeln 6 verfügt, die zwischen sich die Ausnehmung 5 aufnehmen.

Bei der im rechten Teil der Fig. 3 dargestellten Variante sind ebenfalls I-förmige Schienenstöße 1 a, 1 b realisiert. Allerdings ist der Unterflansch 4 im Querschnitt umgekehrt T-förmig ausgestaltet. Der Oberflansch 2 verfügt über einen Fortsatz 2', welcher in Verlängerung eines die beiden Flansche 2, 4 koppelnden Verbindungssteges an den Oberflansch 2 angeschlossen ist. Selbstverständlich handelt es sich bei den in der Fig. 3 und im Übrigen in den Figuren 1 und 2 dargestellten Schienenstößen 1 a, 1 b nur um nicht einschränkende Beispielfälle.

Man erkennt, dass die beiden benachbarten Schienenstöße 1 a, 1b am Oberflansch 2 mit einer Gelenkverbindung 7, 8, 9 ausgerüstet sind. Die Gelenkverbindung 7, 8, 9 verfügt über wenigstens eine den oberen Stoßbereich S überbrückende Loslagerwange 7. Mit der Loslagerwange 7 wirken zwei Festlagerwangen bzw. Festlagerwangenpaare 8, 9, einerseits an dem einen Schienenstoß 1a und andererseits an dem anderen Schienenstoß 1b zusammen, wie nachfolgend noch näher erläutert wird.

Zusätzlich ist eine Aufhängevorrichtung 10, 11, 12 vorgesehen, um die Schienenstöße 1 a, 1b an einem nicht dargestellten Streckenausbau bzw. dessen Decke zu befestigen. Die Aufhängevorrichtung 10, 11, 12 setzt sich aus einer Lasche 10, einer Schwinge 11 mit zwei Schwingenflanschen 11 a, 11 b und schließlich Aufhängemitteln 12 zusammen. Bei den Aufhängemitteln 12 handelt es sich im Rahmen der Darstellung und nicht einschränkend um Aufhängeketten, welche die Schwinge 11 mit der Decke des Streckenausbaus verbinden. Die Lasche 10 ist gelenkig an die Schwinge 11 angeschlossen und sorgt ihrerseits für eine gelenkige Verbindung mit der Loslagerwange 7.

Im Detail verfügt die Loslagerwange 7 ausweislich der Fig. 2 über eine Drehaufnahme 13, in welcher die Lasche 10 mit einem Wangendrehblatt 10a in Schienenlängsrichtung drehbar gelagert ist, wie ein Doppelpfeil in Fig. 2 andeutet. Tatsächlich wird insgesamt eine Taschendrehaufnahme an dieser Stelle realisiert, weil die Loslagerwange 7 im Bereich ihrer Drehaufnahme 13 zwischen den beiden beidseitigen Festlagerwangen 8 an dem einen Schienenstoß 1 a fixiert ist.

Das Wangendrehblatt 10a der Lasche 10 ist mit einer Bohrung 14 ausgerüstet, welche mit korrespondierenden Bohrungen 15 in den beiden Festlagerwangen 8 an dem einen Schienenstoß 1a korrespondiert. Tatsächlich durchdringt nämlich ein gemeinsamer Lagerbolzen 16 die vorgenannten Bohrungen 14, 15, so dass die Lasche 10 mit ihrem Wangendrehblatt 10a einwandfrei in der Drehaufnahme 13 der Loslagerwange 7 gehalten wird und die durch den Doppelpfeil in Fig. 2 angedeuteten Schwenkbewegungen in im Wesentlichen Schienenlängsebene vollführen kann.

Zusätzlich zu dem Wangendrehblatt 10a verfügt die Lasche 10 über ein Schwingendrehblatt 10b, welches zwischen den beiden Schwingenflanschen 11a, 11 b der Schwinge 11 aufgenommen wird. Auch in diesem Fall ist eine drehbare Lagerung in im Wesentlichen Schienenlängsebene realisiert. Dazu ist das Schwingendrehblatt 10b mit einer Bohrung 17 ausgerüstet, zu welcher Bohrungen 18 in den beiden Schwingenflansch 11a, 11 b korrespondieren. Ein gemeinsamer Lagerbolzen 19 durchdringt die vorgenannten Bohrungen 17, 18, so dass die gewünschte Drehgelenkigkeit in Schienen- und auch Schwingenlängsebene erreicht wird.

Man erkennt, dass die Loslagerwange 7 mit dem in die Drehaufnahme 13 eingreifenden Drehblatt 10a der Lasche 10 eine zusammengesetzte Höhe aufweist, welche nahezu derjenigen Höhe H der beiden gleich ausgebildeten Festlagerwangen 8 oberhalb der U-Schenkel 6 am Oberflansch 2 entspricht. Gleichzeitig taucht das Schwingendrehblatt 10b der Lasche 10 nahezu vollständig zwischen die beiden Schwingenflansche 11a, 11b ein, so dass im Ergebnis ein nur geringfügiger Spalt Sp zwischen dem Kopf der beiden Festlagerwangen 8 an dem einen Schienenstoß 1a und dem Fuß der beiden Schwingenflansche 11 a, 11 b verbleibt. Die zusammengesetzte Bauhöhe der gelenkigen Schienenverbindung 7, 8, 9 in Verbindung mit der Aufhängevorrichtung 10, 11, 12 ist also gering. Gleichzeitig werden lediglich zwei Lagerbolzen 19, 16 für die Verbindung der Schwinge 11 mit den Schienenstößen 1 a, 1 b benötigt, was ergänzend zur Materialersparnis beiträgt.

Anhand der Fig. 2 erkennt man, dass die Loslagerwange 7 mit zwei beidseitigen Axialstegen 20 ausgerüstet ist, die in zugehörige Axialausnehmungen 21 der Festlagerwangen 8 an dem einen Schienenstoß 1a eingreifen. Auf diese Weise kann die Loslagerwange 7 in der in Fig. 2 durchgezogen dargestellten Montagestellung einwandfrei im Vergleich zu den beiden Festlagerwangen 8 ausgerichtet werden. In Transportstellung der Schienenstöße 1 a, 1b nimmt die Loslagerwange 7 dagegen die strichpunktiert in der Fig. 2 angedeutete Position ein, und ist hierbei an den anderen Schienenstoß 1 b im Wesentlichen ohne Überstand lösbar angeschlossen. Das deutet die strichpunktierte Position an. Selbstverständlich kann die Loslagerwange 7 in Transportstellung der Schienenstöße 1a, 1b alternativ auch an den einen Schienenstoß 1a im Wesentlichen ohne Überstand lösbar angeschlossen werden.

Um sowohl die Montage- als auch die Transportstellung einwandfrei einnehmen zu können, mögen zusätzlich fußseitig der Loslagerwange 7 ein oder mehrere Positionierstege 22 realisiert sein, die in eine zugehörige Positionierausnehmung 23 im Oberflansch 2 bzw. in die dortige Ausnehmung 5 eingreifen. Das ist jedoch nicht zwingend.

Zusätzlich zu der Drehaufnahme 13 verfügt die Loslagerwange noch über eine an die Drehaufnahme 13 anschließende Anschlagzunge 24. Die Anschlagzunge 24 trägt ihrerseits einen Führungsbolzen 25, welcher in bogenförmige Langlöcher 26 der beiden Lagerwangen 9 an dem anderen Schienenstoß 1b eingreift. Die Langlöcher 26 sind bogenförmig ausgestaltet, damit in Fig. 1 durch einen Doppelpfeil angedeutete Drehbewegungen der Schienenstöße 1 a, 1b zueinander um einen im Bereich des Unterflansches 4 oder darunter liegenden Drehpunkt D bzw. eine entsprechende Drehachse D verkantungsfrei aufgenommen werden können.

Neben dieser Führung des Führungsbolzens 25 in den Langlöchern 26 liegt die Anschlagzunge 24 noch an einem Gegenanschlag 27 an, der zusammen mit den beiden Führungswangen 9 an dem anderen Schienenstoß 1b einen Gleitschuh formt. Die Anschlagzunge 24 besitzt kopfseitig eine bogenförmige Gestalt mit in etwa vergleichbarem Kreisbogen wie die bogenförmigen Langlöcher 26. Mit einem ähnlichen bogenförmigen Charakter ist der Gegenanschlag 27 an seiner der Anschlagzunge 24 zugewandten Gleitfläche ausgerüstet, um eine verkantungsfreie Drehbewegung der beiden Schienenstöße 1 a, 1 b um die Drehachse D zu ermöglichen.

Zusätzlich ist noch eine untere Gelenkverbindung 28, 29 realisiert. Diese verfügt über ein Schwenklagerblatt 28, welches in eine Schwenklagerschale 29 eingreift, wie dies allgemein bekannt und nicht Gegenstand der vorliegenden Erfindung ist.

## Patentansprüche

1. Gelenkige Schienenverbindung für Schienstöße (1 a, 1 b) von Profillaufschienen, wobei zumindest im oberen Stoßbereich (S) benachbarter Schienenstöße (1a, 1b) eine Gelenkverbindung (7, 8, 9) mit wenigstens einer den Stoßbereich (S) überbrückenden Loslagerwange (7) vorgesehen ist, und wobei zusätzlich eine Aufhängevorrichtung (10, 11, 12) realisiert ist, welche mittels einer Lasche (10) gelenkig an die Loslagerwange (7) angeschlossen ist, **dadurch gekennzeichnet, dass** die Loslagerwange (7) eine Drehaufnahme (13) für die Lasche (10) aufweist, und dass die Loslagerwange (7) zumindest im Bereich ihrer Drehaufnahme (13) zwischen zwei beidseitigen Festlagerwangen (8) an dem einen Schienenstoß (1 a) fixiert ist.

2. Gelenkige Schienenverbindung nach Anspruch 1, **dadurch gekennzeichnet, dass** die Lasche (10) mit einem in die Drehaufnahme (13) der Loslagerwange (7) eingreifenden Wangendrehblatt (10a) ausgerüstet ist.

3. Gelenkige Schienenverbindung nach Anspruch 1 oder 2, **dadurch gekennzeichnet, dass** das Wangendrehblatt (10a) eine Bohrung (14) für einen die Bohrung (14) sowie zwei korrespondierende Lagerbohrungen (15) in den Festlagerwangen (8) des einen Schienenstoßes (1 a) durchdringenden Lagerbolzen (16) aufweist.

4. Gelenkige Schienenverbindung nach einem der Ansprüche 1 bis 3, **dadurch gekennzeichnet, dass** die Loslagerwange (7) zusammen mit dem in die Drehaufnahme (13) eingreifenden Wangendrehblatt (10a) der Lasche (10) eine zusammengesetzte Höhe aufweist, welche im Wesentlichen derjenigen Höhe (H) der beiden nahezu gleich ausgebildeten Festlagerwangen (8) an dem einen Schienenstoß (1 a) entspricht.

5. Gelenkige Schienenverbindung nach einem der Ansprüche 1 bis 4, **dadurch gekennzeichnet, dass** die Loslagerwange (7) mit wenigstens einem in eine Axialausnehmung (21) der Festlagerwange (8) an dem einen Schienenstoß (1a) eingreifenden Axialsteg (20) zur ausgerichteten Montage zwischen den beiden Festlagerwangen (8) ausgerüstet ist.

6. Gelenkige Schienenverbindung nach Anspruch 5, **dadurch gekennzeichnet, dass** die Loslagerwange (7) mit beidseitigen Axialstegen (20) versehen ist, die einerseits in die eine Festlagerwange (8) und andererseits in die andere Festlagerwange (8) an dem einen Schienenstoß (1a) eingreifen.

7. Gelenkige Schienenverbindung nach einem der Ansprüche 1 bis 6, **dadurch gekennzeichnet, dass** die Loslagerwange (7) eine an die Drehaufnahme (13) anschließende Anschlagzunge (24) aufweist.

8. Gelenkige Schienenverbindung nach einem der Ansprüche 1 bis 7, **dadurch gekennzeichnet, dass** die Anschlagzunge (24) an einem Gegenanschlag (27) anliegt, welcher an weiteren zwei Festlagerwangen (9) an dem anderen Schienenstoß (1 b) angeordnet ist.

9. Gelenkige Schienenverbindung nach einem der Ansprüche 1 bis 8, **dadurch gekennzeichnet, dass** die Lasche (10) mit einem weiteren Schwingendrehblatt (10b) ausgerüstet ist, welches drehbar an eine Schwinge (11) der Aufhängevorrichtung (10, 11, 12) angelenkt ist.

10. Gelenkige Schienenverbindung nach einem der Ansprüche 1 bis 9, **dadurch gekennzeichnet, dass** zusätzlich zu der oberen Gelenkverbindung (7, 8, 9) eine untere Gelenkverbindung (28, 29) mit Schwenklagerschale (29) und hierin eingreifendem Schwenklagerblatt (28) vorgesehen ist.

11. Gelenkige Schienenverbindung nach einem der Ansprüche 1 bis 10, **dadurch gekennzeichnet, dass** die Loslagerwange (7) in Transportstellung der Schienenstöße (1 a, 1b) an einem Schienenstoß (1 b) im Wesentlichen ohne Überstand festgelegt ist.

12. Gelenkige Schienenverbindung nach einem der Ansprüche 1 bis 11, **dadurch gekennzeichnet, dass** die Schienenstöße (1a, 1b) einen 1-förmigen Querschnitt mit z. B. im Wesentlichen U-förmigem Oberflansch (2) und umgekehrt U-förmigen Unterflansch (4) aufweisen.

## Claims

1. An articulated rail connection for rail joints (1a, 1b) of profiled sliding rails, in which at least in the upper joint area (S) of adjacent rail joints (1a, 1b) an articulated connection (7,8,9) is provided having at least one loose-bearing cheek (7) spanning the joint area (S), and in which in addition a suspension device (10,11,12) is realized, which is connected in an articulated manner to the loose-bearing cheek (7) by means of a shackle (10), **characterized in that** the loose-bearing cheek (7) has a rotational retainer (13) for the shackle (10), and that the loose-bearing cheek (7) is fixed on the one rail joint (1 a) at least in the region of its rotational retainer (13) between two fixed-bearing cheeks (8) on both sides.

2. The articulated rail connection according to Claim 1, **characterized in that** the shackle (10) is equipped with a cheek rotational plate (10a) engaging into the rotational retainer (13) of the loose-bearing check (7).

3. The articulated rail connection according to Claim 1 or 2, **characterized in that** the cheek rotational plate (10a) has a bore (14) for a bearing pin (16) penetrating the bore (14) and two corresponding bearing bores (15) in the fixed-bearing cheeks (8) of the one rail joint (1 a).

4. The articulated rail connection according to any of Claims 1 to 3, **characterized in that** the loose-bearing cheek (7) together with the check rotational plate (10a) of the shackle (10), engaging into the rotational retainer (13), has an assembled height which corresponds substantially to the height (H) of the two fixed-bearing cheeks (8), of almost identical construction, at the one rail joint (1a).

5. The articulated rail connection according to any of Claims 1 to 4, **characterized in that** the loose-bearing cheek (7) is equipped with at least one axial cross-piece (20) engaging into an axial recess (21) of the fixed-bearing cheek (8) at the one rail joint (1a), for aligned mounting between the two fixed-bearing cheeks (8).

6. The articulated rail connection according to Claim 5, **characterized in that** the loose-bearing cheek (7) is provided with axial cross-pieces (20) on both sides, which engage on the one hand into the one fixed-bearing cheek (8) and on the other hand into the other fixed-bearing cheek (8) at the one rail joint (1 a).

7. The articulated rail connection according to any of Claims 1 to 6, **characterized in that** the loose-bearing cheek (7) has a stop tongue (24) adjoining the rotational retainer (13).

8. The articulated rail connection according to any of Claims 1 to 7, **characterized in that** the stop tongue (24) lies against a counter-stop (27) which is arranged on a further two fixed-bearing cheeks (9) at the other rail joint (1 b).

9. The articulated rail connection according to any of Claims 1 to 8, **characterized in that** the tongue (10) is equipped with a further rocker rotational plate (10b) which is articulated rotatably to a rocker (11) of the suspension device (10,11,12).

10. The articulated rail connection according to any of Claims 1 to 9, **characterized in that** in addition to the upper articulated connection (7,8,9) a lower articulated connection (28, 29) is provided with a swivel bearing box (29) and a swivel bearing plate (28) engaging herein.

11. The articulated rail connection according to any of Claims 1 to 10, **characterized in that** the loose-bearing cheek (7) is secured, substantially without protrusion, at a rail joint (1b) in the transport position of the rail joints (1a, 1b).

12. The articulated rail connection according to any of Claims 1 to 11, **characterized in that** the rail joints (1 a, 1 b) have an I-shaped cross-section with, for example, a substantially U-shaped upper flange (2) and oppositely U-shaped lower flange (4).

## Revendications

1. Éclissage de rails articulé pour des joints de rails (1a, 1 b) de rails de roulement profilés, au moins dans la zone supérieure du joint (S) de joints de rails voisins (1a, 1b) étant prévue une liaison articulée (7, 8, 9) avec au moins une joue de coussinet libre (7) chevauchant la zone de joint (S) et en supplément, un dispositif d'accrochage (10, 11, 12) étant réalisé, qui au moyen d'une patte (10) se raccorde de façon articulée sur la joue de coussinet libre (7), **caractérisé en ce que** la joue de coussinet libre (7) comporte un logement rotatif (13) pour la patte (10), et **en ce qu'**au moins dans la zone de son logement rotatif (13), la joue de coussinet libre (7) est fixée entre deux joues de coussinet fixes (8) sur l'un des joints de rail (1a).

2. Éclissage de rails articulé selon la revendication 1, **caractérisé en ce que** la patte (10) est équipée d'une lame de joue rotative (10a) qui s'engage dans le logement rotatif (13) de la joue de coussinet libre (7).

3. Éclissage de rails articulé selon la revendication 1 ou 2, **caractérisé en ce que** la lame de joue rotative (10a) comporte un perçage (14) pour un boulon de coussinet (16) traversant le perçage (14), ainsi que deux perçages de coussinet (15) correspondants dans les joues de coussinet fixes (8) de l'un des joints de rail (1a).

4. Éclissage de rails articulé selon l'une quelconque des revendications 1 à 3, **caractérisé en ce que** la joue de coussinet libre (7) comporte ensemble avec la lame de joue rotative (10a) de la patte (10) s'engageant dans le logement rotatif (13) une hauteur composée, qui correspond sensiblement à la hauteur (H) des joues de coussinet fixes (8) pratiquement conçues de façon identique sur l'un des joints de rail.

5. Éclissage de rails articulé selon l'une quelconque des revendications 1 à 4, **caractérisé en ce que** la joue de coussinet libre (7) est équipée d'au moins un listel axial (20) s'engageant dans un évidement axial (21) de la joue de coussinet fixe (8) sur l'un des joints de rail (1a), pour le montage orienté entre les deux joues de coussinet fixes (8).

6. Éclissage de rails articulé selon la revendication 5, **caractérisé en ce que** la joue de coussinet libre (7) est munie de listels axiaux (20) bilatéraux, qui s'engagent d'une part dans une joue de coussinet fixe (8) et d'autre part dans l'autre joue de coussinet fixe (8) sur le joint de rail (1a).

7. Éclissage de rails articulé selon l'une quelconque des revendications 1 à 6, **caractérisé en ce que** la joue de coussinet libre (7) comporte une languette de butée (24) se raccordant sur le logement rotatif (13).

8. Éclissage de rails articulé selon l'une quelconque des revendications 1 à 7, **caractérisé en ce que** la languette de butée (24) s'appuie sur une contrebutée (27) qui est disposée sur deux joues de coussinet fixes (9) supplémentaires sur l'autre joint de rails (1 b).

9. Éclissage de rails articulé selon l'une quelconque des revendications 1 à 8, **caractérisé en ce que** la patte est équipée d'une autre lame de coulisse rotative (10b) qui est articulée de façon rotative sur une coulisse (11) du dispositif d'accrochage (10, 11, 12).

10. Éclissage de rails articulé selon l'une quelconque des revendications 1 à 9, **caractérisé en ce qu'**en supplément de l'éclissage articulé supérieur (7, 8, 9), il est prévu un éclissage articulé inférieur (28, 29) avec coquille de coussinet pivotant (29) et lame de coussinet pivotant (28) s'engageant dans cette dernière.

11. Éclissage de rails articulé selon l'une quelconque des revendications 1 à 10, **caractérisé en ce que**, en position de transport des joints de rails (1 a, 1 b), la joue de coussinet libre (7) est fixée sensiblement sans débordement sur un joint de rail (1b).

12. Éclissage de rails articulé selon l'une quelconque des revendications 1 à 11, **caractérisé en ce que** les joints de rails (1a, 1b) comportent une section transversale en forme de I avec une bride supérieure (2) par exemple sensiblement en forme de U et une bride inférieure (4) en forme de U inversé.
